Europäisches Patentamt

European Patent Office

Office européen des brevets

(11) Publication number: **0 341 819**
**A2**

# EUROPEAN PATENT APPLICATION

(21) Application number: **89303358.9**

(22) Date of filing: **05.04.89**

(51) Int. Cl.⁴: **G06F 15/62**

The title of the invention has been amended (Guidelines for Examination in the EPO, A-III, 7.3).

(30) Priority: **12.04.88 GB 8808621**

(43) Date of publication of application:
**15.11.89 Bulletin 89/46**

(84) Designated Contracting States:
**DE FR IT NL SE**

(71) Applicant: **GEC-Marconi Limited**
**The Grove Warren Lane**
**Stanmore Middlesex HA7 4LY(GB)**

(72) Inventor: **Carter, John Roy**
**23 Great Smials**
**South Woodham Ferrers Essex CM3**
**5WN(GB)**

(74) Representative: **Tolfree, Roger Keith et al**
**The General Electric Co. p.l.c. Patent**
**Department GEC-Marconi Research Centre**
**West Hanningfield Road**
**Great Baddow, Chelmsford Essex CM2**
**8HN(GB)**

(54) **Boundary tracing method and system.**

(57) A boundary tracing system employs a search algorithm around each boundary pixel in a boundary trace, the search algorithm used being dependent on the direction from which each pixel was approached.

FIG. 7.

## Improvements to Boundary Tracing

This invention relates to a hardware implementation of a Boundary Tracing Algorithm which has an adaptive inclination.

Recently there has been, within the image processing industry, an increasing emphasis on being able to extract from a video image an object's shape and size characteristics. For military applications it is essential, within intelligent systems, to be able to extract an object's shape for comparison with pre-scaled stored shapes for target characterisation. Within the commercial environment, product fault detection can been achieved in much the same way by comparing a set of stored image shapes with actual product shapes and looking for fault conditions such as missing components for production line quality control.

To enable this automatic extraction of image characteristics to function within the forementioned systems, the image processor must extract the object's boundary regions. This process must, in the main, operate at near real-time rates. That is to say, the output of the system must be updated at rates equal to or higher than the input video rate.

Imaging algorithms can utilise the fact that some of the properties of the object are different from those of the background. These properties include basic spatial characteristics such as grey level, edge value and texture. By using such features, the original complex scene can be reduced to a simple binary image which lends itself to easy object characteristic extraction.

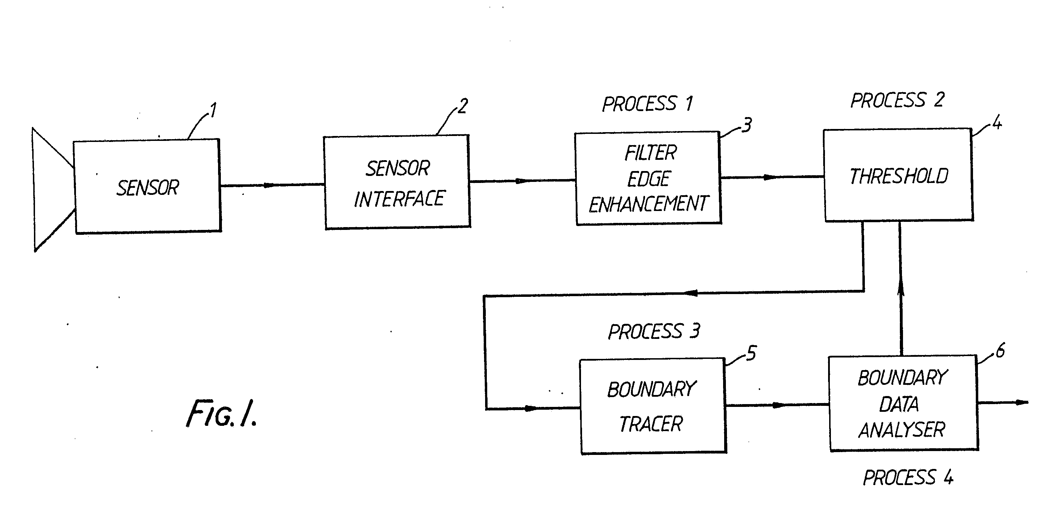

The processes involved can be summarised as follows and are shown as a block diagram in Figure 1.

Data from a sensor 1 is passed through a sensor interface 2 which places the data into the correct format for the rest of the process. The data is then processed in four stages;

1) The data is firstly processed by edge enhancement operators such as high pass filtering in an edge enhancement unit 3,

2) the processed scene is then compared with a threshold value to produce a binary image containing only background to object region (boundary) information in a threshold unit 4,

3) The boundary pixels obtained are then grouped together as a sequence of boundary addresses or a chain code by a boundary tracer 5,

4) The boundary addresses are then analysed to acquire shape information about the target in a boundary data analyser 6.

Processes 1 and 2 are not new and require no further discussion, however thresholding is critical if a low rate of false detection of object pixels is to be maintained. Usually an adaptive method is implemented using statistical techniques. Processes 1 and 2 are thus important for extracting the boundary information. It would be possible to change the threshold level depending on the success of the Boundary Tracer in detecting complete boundaries.

This patent relates to process 3, the forementioned processes 1 and 2 take a complex scene and by the combination of edge extraction and thresholding reduce the original image into a simple binary image. Process 3 takes this binary image and extracts each object with its boundary data. It is this process which, along with process 1 and 2, must be done in hardware to achieve the processing rates required for real time applications.

Process 4 analyses the boundary data provided by process 3 with known algorithms for object identification. The algorithms developed for this stage are usually implemented in software as processes 1, 2 and 3, reduce the amount of data to be processed sufficiently to allow this operation to be executed at real-time rates. The algorithm used for boundary analysis depends largely on the application. However, the following information among others can be derived from the boundary data:- size of the object, aspect ratio, density and centroid position.

The operation of a known method of implementing process 3, the Boundary Tracer, will now be discussed in more detail.

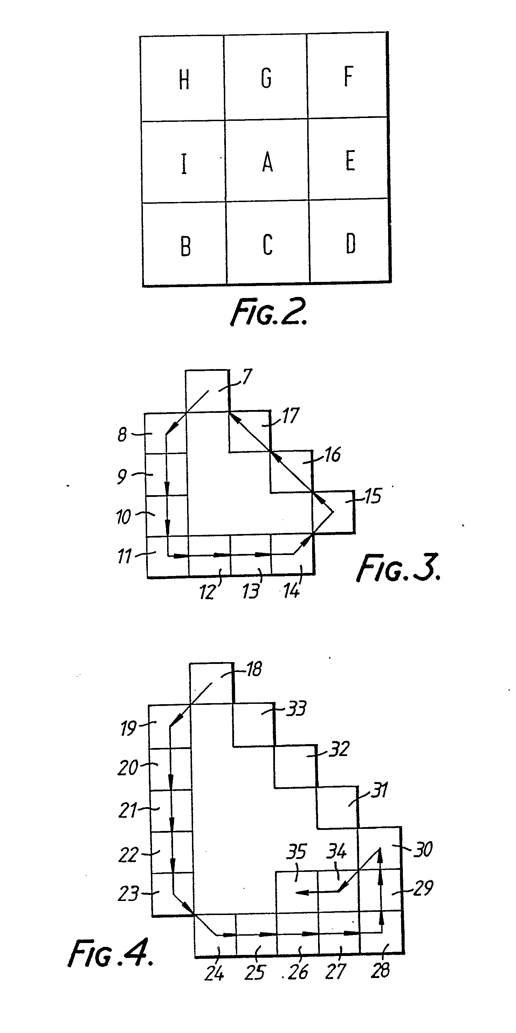

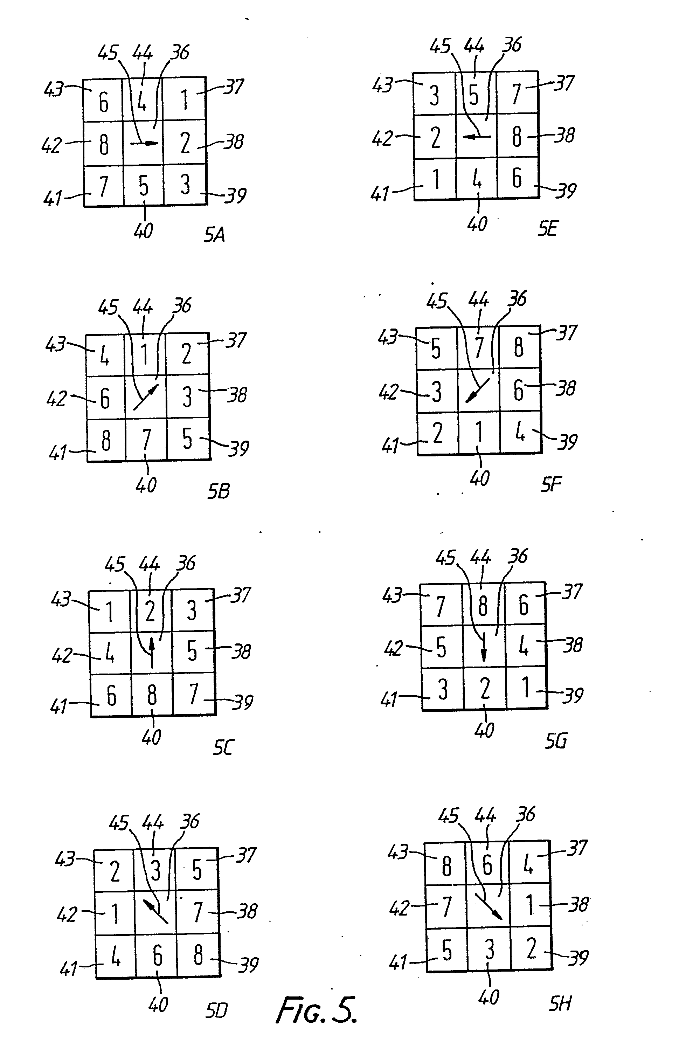

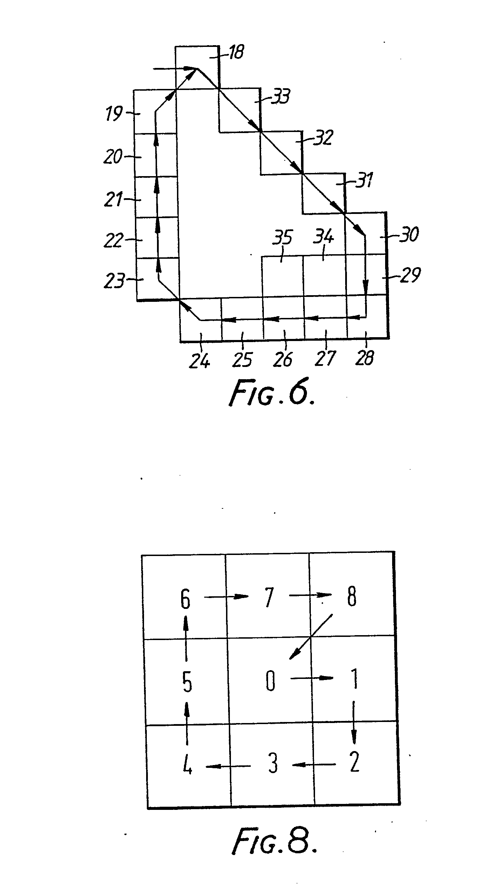

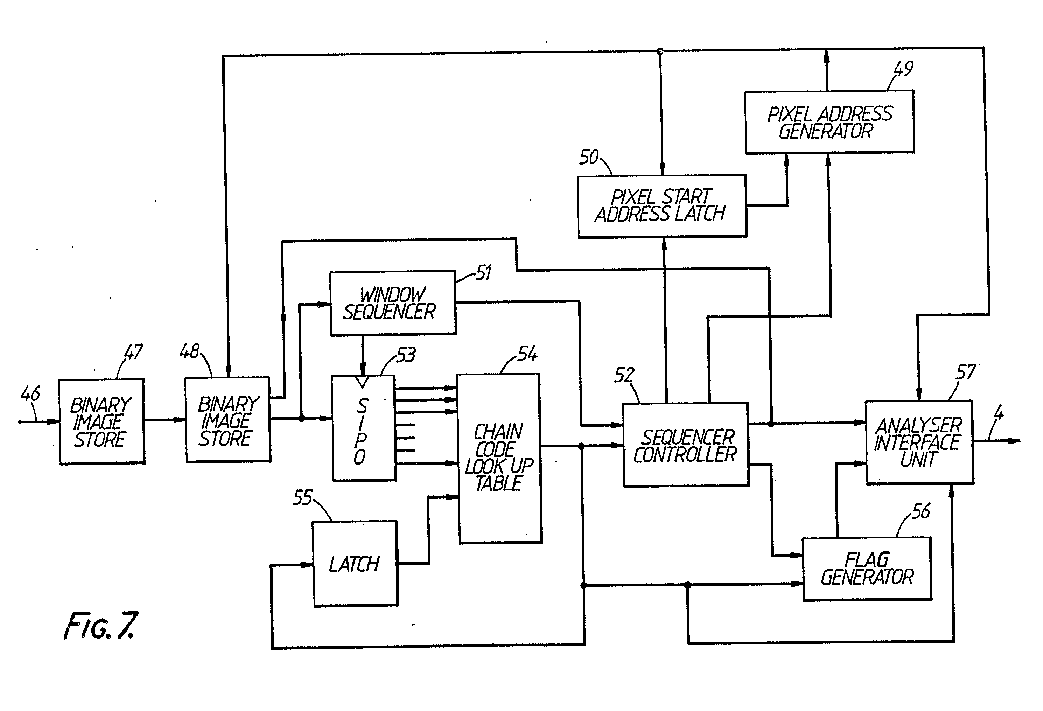

As the name implies, boundary tracing involves tracing out the boundary between an object and its background. A boundary pixel A surrounded by eight neighbouring pixels B,C,D,E,F,G,H,I is shown in Figure 2. Within a binary image each pixel in each line is tested in order until a boundary pixel such as the pixel A is discovered. On finding a boundary pixel, each neighbouring pixel is interrogated, in turn. In the case of pixel A this would be in the order B,C,D,E,F,G,H,I, until a boundary pixel is found. When a boundary pixel is found the tracer will move to the position of the first found boundary pixel, and repeat the process there. This will occur regardless of any of the other surrounding pixels being boundary pixels. The process is repeated until the tracing returns to the initial starting position or a position is reached where no further boundary pixels are found. Pixels are deleted to prevent them being traced again.

Figure 3 shows an example of such a process, a boundary pixel 7 being the first boundary pixel found. The boundary tracing process then goes on to boundary pixels 8 to 17 in order and stops at the pixel 17 because no further boundary pixels are adjacent to the pixel 17.

This simple technique can only handle limited single pixel boundaries as thick boundaries can cause 'inward' tracing, and eventual incorrect trace termination at the wrong pixel.

Figure 4 shows such an error. A boundary pixel 18 is the first boundary pixel found and the boundary tracing process then goes correctly through boundary pixels 10 to 30. However instead of the boundary tracing process moving on to pixels 31 to 33 it first detects a boundary pixel 34 and goes on to another boundary pixel 35 where the sequence will terminate because all of the adjacent boundary pixels will already have been deleted. As a result the boundary pixels 18 to 33 are not grouped together as a single outline.

As a result of this problem this method of boundary tracing is not practical since boundaries will generally vary between thick and thin due to errors in thresholding. This invention provides a boundary tracing method in which the search algorithm used is dependent on the direction of trace.

This invention also provides a boundary tracing system in which a search algorithm dependent on the direction of trace is used.

The adaptive tracer works in much the same way as the known method described above by examining the adjacent pixels to a boundary pixel in order until another boundary pixel is discovered but the search priority for tracing is modified depending on the trace direction, that is the direction from which the present boundary pixel was approached. Thus the search priority is no longer fixed.

Obviously for a boundary pixel there are eight surrounding pixels from which it could be approached giving rise to eight different directions of travel, thus there will be eight different priorities of search.

Although the method of selection of the next boundary pixel is easily envisaged by thinking in terms of an order of search and selection of the first boundary pixel found, it is preferred in an adaptive boundary tracing system to use a fixed order of search of the surrounding pixels and assign each position a priority dependent on the direction from which the present boundary pixel was approached. The adjacent boundary pixel having the highest priority is then selected. This process being called the search algorithm.

A boundary tracing system employing the invention will now be described with reference to the accompanying figures in which;

Figures 5A to 5H show a table of pixel priorities for different directions of travel,

Figure 6 shows a group of boundary pixels and the order in which they are selected by the boundary tracing system,

Figure 7 shows a boundary tracing system employing the invention, in block diagram form, and

Figure 8 shows the adjacent pixel checking sequence used by the system of Figure 7; identical parts having the same reference numerals throughout.

Referring now to Figures 5A to 5H each figure shows a central boundary pixel 36 and eight adjacent pixels 37 to 44. Each central pixel 36 contains an arrow 45. The arrow 45 refers to the direction of the entrance path in each case, and the numbers in the adjacent pixels 37 to 44 give the priority order in which the adjacent pixels 37 to 44 will be selected if they are boundary pixels, the lowest numbers having the highest priority.

Referring to figure 6, a first boundary pixel 18 is found in an image. The initial entrance direction is left to right (normal sequential scanning sequence), so the priority sequence shown in Figure 5A is used so the two adjacent boundary pixels 19 and 33 are assigned priorities of 7 and 3 respectively and as a result the boundary pixel 33 is selected as the next boundary pixel in sequence.

Boundary pixel 18 is deleted and the process is repeated for pixels 33, 32 and 31, in each of these cases only one adjacent boundary pixel is present, so it is selected.

At boundary pixel 30 the entrance direction is diagonally to the right and down so the priority sequence shown in Figure 5H is used, so the two adjacent boundary pixels 29 and 34 are given priorities of 3 and 5 respectively, so pixel 29 is selected as the next boundary pixel.

At boundary pixel 29 the entrance direction is downwards to the priority sequence shown in Figure 5G is used and the adjacent boundary pixels 27, 28 and 34 are given priorities of 3, 2 and 5 respectively so pixel 28 is selected as the next boundary pixel.

At boundary pixel 28 the entrance direction is downwards so the priority sequence shown in Figure 5G is again used and the adjacent boundary pixels 27 and 34 are assigned priorities of 5 and 7 respectively so pixel 27 is selected as the next boundary pixel.

At a boundary pixel 27 the entrance direction is right to left so the priority sequence of figure 5E is again used and the adjacent boundary pixels 26, 34 and 35 are assigned priorities of 2, 5 and 3 respectively so pixel 26 is selected.

At boundary pixel 26 the entrance direction is again right to left so the priority sequence of figure 5E is used and the adjacent boundary pixels 25, 34 and 35 are assigned priorities of 2, 7 and 5 respectively so pixel 25 is selected.

At boundary pixel 25 the entrance direction is again right to left so the priority sequence of Figure 5E is used and the adjacent boundary pixels 24 and 35 are assigned priorities of 2 and 7 respectively so the pixel 24 is selected.

For the pixels 20 to 24 there is only one adjacent boundary pixel, so this pixel is selected in each case. When the boundary pixel 19 is reached no adjacent boundary pixels can be found, so the sequence ends at pixel 19.

It will be seen that the boundary tracer will always take the outermost pixels when tracing, and it can be seen that successful tracing takes place. The adapative boundary tracer has classified all the binary pixels so that those points which belong to the same object are grouped together for subsequent analysis.

A 3 bit code, chain code, is used to define the direction of trace. Thus a chain of codes is all that needs to be passed over to the Boundary Data Analyser for subsequent analysis and object classification, Process 4. However, it is possible to send the actual boundary pixel co-ordinates instead of this code. The start and end of tracing sequences must always be marked in some way.

An adaptive Boundary Tracer employing the algorithm is shown in Figure 7.

The adaptive tracing requires a whole boundary to be processed before another can be started. This implies a non-sequential nature of accessing binary data from the store. Thus it is necessary for the boundary tracer to work on a whole frame of data. For this reason data from a video scanning system passing along a line 46 is stored in a first binary image store 47.

The binary image store 47 stores an entire frame of the image and then switches it to a second binary image store 48. This switch will occur then the processing of a whole video image in the first store 47 and the capturing of a new video image in the second store 48 are both complete.

The data entering along line 46 has already been operated on by the previously described processes 1 and 2 such that a boundary pixel is represented by a binary "1" value and a non-boundary pixel by a binary "0" value.

The binary image store 48 is accessed by a pixel address generator 49.

The pixel address generator is cleared just before the switching of a frame of data from the first binary image store 47 to the second binary image store 48. On completion of store switching, the pixel address generator 49 will provide a normal sequential addressing sequence through the frame stored in the second binary image store 48.

The pixel address generator 49 will address the binary image store 48. When a first binary one pixel is addressed the pixel address generator value is preserved in a start address latch 50. Once preserved then a window sequence generator 51 will go through a ten clock cycle sequence. The output codes from the window sequence generator 51 will be decoded by a sequence controller 52. The sequence controller 52 uses these codes to produce signals which are supplied to the pixel address generator 49 to steer it through a desired window sequence. The first eight clock cycles will cause the pixel address generator 49 to provide the addresses of the neighbouring pixels to the first binary one pixel to the binary image store in a sequence shown in Figure 8. Each of the surrounding pixel values is clocked into a serial in parallel out (SIPO) register 53. The 9th clock cycle of the window sequence generator sequence causes the pixel address generator 49 to return to the first binary one pixel address. The 10th clock cycle initiates one of two events depending on whether or not one of the neighbouring pixels is a binary one pixel.

The values of the eight neighbouring pixels are supplied by the SIPO register 53 to a chain code look up table 54. The chain code look up table 54 contains the eight search priority sequences shown in Figures 5A to 5H, for the first boundary pixel found the priority sequence 1 shown in Figure 5A is used.

The chain code look up table 54 compares the values of the eight neighbouring pixels with the priority sequence and selects the neighbouring binary one pixel having the highest priority and generates a chain code defining the direction of trace to this pixel which is supplied to the sequence controller 52, a latch 55 and a flag generator 56. The chain code from the chain code look-up table will have an active qualifying bit. The sequence contoller 52 integrates this bit and causes the pixel address generator 49 to move onto the new adjoining pixel address as defined by the chain code. Also, the chain code, which defines the direction of tracing is stored in the latch 55.

On examination of subsequent boundary pixels in the chain the priority sequence used is selected by the chain code look up table 54 depending on the previous chain code which is supplied to the chain code look up table 54 by latch 55. Thus the priority sequence used is dependent on the direction of trace.

Prior to movement to the new adjoining pixel the sequence controller 52 changes the value of the present boundary pixel in the second binary image store 48 from a one to a zero, and supplies the address of the present boundary pixel to an analyser interface unit 57.

If none of the neighbouring pixels are binary one pixels then the chain code qualifying bit will be inactive. The sequence contoller 52 on intergrating this bit will load the preserved pixel start address from the pixel start address latch 50 into the pixel address generator 49 to resume the normal sequential image scanning until the next boundary pixel cluster is detected, and will change the value of the present boundary pixel in the second binary image store 48 from a one to a zero.

The chain code look up table is divided into eight pages. The page selected is dependent on the latched chain code from the previous trace and thus on the direction of tracing, or for the first boundary pixel in a chain the page used is pre-set. The page selected is then addressed by the surround pixel values stored in the SIPO. So the selected page will have a search algorithm, for use on the data from the SIPO 53 as defined by the priority orders in Figure 5. The resulting chain code and qualifer provides sequencing information to the sequence controller 52.

On detection of a boundary pixel and on the l0th window sequencing clock cycle, the boundary pixel address is sent to the Analyser Interface Unit 57, in this case a first in first out, FIFO. Along with this address are three flags generated by the Flag Generator 56 in response to control signals from the sequence controller 52. These flags indicate the start and end of a boundary trace and end of each frame of processing.

The analyser interface unit 57 sends its data along line 58 to a boundary analyser (not shown) where process 4 is carried out.

To reduce the quantity of data for boundary analysis, the chain code only could be passed to the Analyser Interface Unit 57. In this case only the start address of a boundary trace will be required by the boundary analyser and all subsequent boundary pixels will be defined by the chain code. The end of a boundary will be marked by an end of boundary flag.

## Claims

1. A boundary tracing method in which the search algorithm used is dependent on the direction of trace.

2. A boundary tracing method as claimed in claim 1 in which a separate search algorithm is used for each direction of trace.

3. A boundary tracing method as claimed in claim 2 in which the search algorithms shown in the accompanying Figures 5A to 5H are used.

4. A boundary tracing system in which a search algorithm dependent on the direction of trace is used.

5. A boundary tracing system as claimed in claim 4 in which a separate search algorithm is used for each direction of trace.

6. A boundary tracing system as claimed in claim 5 in which the search algorithms shown in the accompanying Figures 5A to 5H are used.

7. A boundary tracing system as claimed in any of claims 4 to 6 in which values of neighbouring pixels to a boundary pixel are operated on by a search algorithm provided by a look up table which contains a plurality of search algorithms and provides one based on the direction of trace.

8. A boundary tracing system as claimed in claim 7 in which the operation of the search algorithm on the neighbouring pixels is used to produce a chain code defining the direction of trace and this chain code is used to select the search algorithm from the look up table.

PROCESS 1     PROCESS 2

1   SENSOR

2   SENSOR INTERFACE

3   FILTER EDGE ENHANCEMENT

4   THRESHOLD

PROCESS 3

5   BOUNDARY TRACER

6   BOUNDARY DATA ANALYSER

PROCESS 4

Fig./.

EP 0 341 819 A2

Fig.2.

Fig.3.

Fig.4.

Fig. 5.

Fig.6.

Fig.8.

FIG. 7.

EP 0 341 819 A2